Europäisches Patentamt

European Patent Office

Office européen des brevets

(11) Publication number: **0 321 452**
**A1**

## (12) EUROPEAN PATENT APPLICATION

(21) Application number: **89101986.1**

(22) Date of filing: **15.10.81**

(51) Int. Cl.⁴: **F 28 D 21/00**
**B 01 D 53/00, F 23 J 15/00**

(30) Priority: **09.04.81 US 252297**

(43) Date of publication of application:
**21.06.89 Bulletin 89/25**

(84) Designated Contracting States:
**AT BE CH DE FR GB IT LI LU NL SE**

(60) Publication number of the earlier application in
accordance with Art. 76 EPC: **0 063 195**

(71) Applicant: **HEAT EXCHANGER INDUSTRIES, INC.**
**678 Troy-Schenectady Road**
**Latham New York 12110 (US)**

(72) Inventor: **Warner, Donald F.**
**678 Troy-Schenectady Road**
**Latham New York 12110 (US)**

(74) Representative: **Gilmour, David Cedric Franklyn et al**
**POTTS, KERR & CO. 15 Hamilton Square**
**Birkenhead Merseyside L41 6BR (GB)**

(54) Method of recovering heat energy from an exhaust gas.

(57) A method and apparatus for recovering heat energy from an exhaust gas containing a corrosive constituent which is condensable at and below a corrosive condensation temperature by passing said gas successively through first and second heat exchangers each connected to transfer heat to a fluid, said second heat exchanger containing a corrosion-protection material having a material limit operating temperature exceeding said corrosive condensation temperature, the flow rates and temperatures of said exhaust gas and the fluid being heated by each heat exchanger being arranged so that passage of said exhaust gas through said first heat exchanger cools said exhaust gas from a first temperature to a second temperature which is below said material limit operating temperature but above said corrosive condensation temperature, and passage of said exhaust gas through said second heat exchanger cools at least a portion of said exhaust gas from a temperature above said corrosive condensation temperature to a temperature below said corrosive condensation temperature whereby said corrosive constituent does not condense in said first heat exchanger, said corrosive constituent does condense in said second heat exchanger, and the cooling of said gas in said first heat exchanger prevents thermal damage to said second heat exchanger.

Description

# METHOD OF RECOVERING HEAT ENERGY FROM AN EXHAUST GAS

The present invention relates to a method of recovering heat energy from an exhaust gas containing a corrosive constituent utilising heat exchangers wherein one heat exchanger has corrosion protection material having a material limit operating temperature below that of the initial temperature of the exhaust gas.

The present invention has been divided out of European Patent Application Nos. 81304807.1 and 85101559.4 and the contents thereof are included herein by reference. Application 81304807.1 is directed to a method and apparatus for recovering heat-energy with a heat exchanger having corrosion protection coverings and operating in a water condensing mode whilst Application 85101559.4 is directed to a method of fabricating heat-exchanger having plastics material coverings deformed to line holes in metal end sheets and to receive plastics cooled tubes and to a heat exchanger so fabricated.

We have found various forms of corrosion protection materials such as ptfe (polytetrafluorethylene) Teflon (trade mark of E.I. du Pont De Nemouis & Co. Inc.), which provides very effective corrosion protection, and has hydrophobic characteristics which co-operate with water vapor condensation to keep a water-condensing heat exchanger clean, and currently available forms of these corrosion-protection materials have deformation, melting or destruction temperatures disadvantageously far below the temperatures of some flue gases from which it is desirable to extract waste heat.

In accordance with the present invention, it is proposed to overcome such disadvantage by operating a water-condensing heat exchanger with corrosion-protection coatings or linings in cooperation with another heat exchanger of conventional type, which conventional type heat exchanger may be severely damaged if condensation takes place in it. The conventional heat exchanger initially cools an exhaust gas such as flue gas down to a temperature which is low enough so that it will not damage the corrosion-protection linings of the water-vapor condensing heat exchanger, yet high enough that sulfur trioxide cannot condense in the conventional heat exchanger so as to damage it.

It is an object of the invention to provide a heat recovering system which handle exhaust gases having a high initial temperature or which is useful with exhaust gases having a wide range of temperatures.

It is a further object of the present invention to provide heat exchanger modules suitable for use in the mentioned water-condensing mode which can be readily combined as needed to suit a wide variety of different flow rate, temperature and heat transfer requirements.

Another object of the invention is to provide a method of recovering heat energy from an exhaust gas and heat exchanger apparatus with corrosion protection material wherein means are provided to cool said gas to a temperature at which such will not damage said material.

According to the present invention there is provided a method of recovering heat energy from an exhaust gas containing a corrosive constituent which is condensable at and below a corrosive condensation temperature by passing said gas successively through first and second heat exchangers each connected to transfer heat to a fluid, said second heat exchanger containing a corrosion-protection material having a material limit operating temperature exceeding said corrosive condensation temperature, the flow rates and temperatures of said exhaust gas and the fluid being heated by each heat exchanger being arranged so that passage of said exhaust gas through said first heat exchanger cools said exhaust gas from a first temperature to a second temperature which is below said material limit operating temperature but above said corrosive condensation temperature, and passage of said exhaust gas through said second heat exchanger cools at least a portion of said exhaust gas from a temperature above said corrosive condensation temperature to a temperature below said corrosive condensation temperature whereby said corrosive constituent does not condense in said first heat exchanger, said corrosive constituent does not condense in said second heat exchanger, and the cooling of said gas in said first heat exchanger prevents thermal damage to said second heat exchanger. Instead of using a first heat exchanger to cool the exhaust gas, a temperature controlled damper valve may be provided to permit inflow of ambient cooling air and/or to restrict the flow of exhaust gas should the temperature exceed a safe operating temperature

Also according to the present invention there is provided apparatus for recovering heat energy from a hot exhaust gas containing a corrosive constituent which is condensable at and below a corrosive condensation temperature, comprising, in combination: a first heat exchanger (AP,AH) connected to receive said hot exhaust gas at a first temperature and operative to cool said exhaust gas by transferring heat to a fluid and to discharge said exhaust gas at a second temperature which is above said corrosive condensation temperature and which is below a material limit temperature: and a second heat exchanger (HXA,HXB) connected to receive exhaust gas which has been discharged from said first heat exchanger (AP,AH) and operative to cool at least a portion of said exhaust gas by transferring heat to a fluid to a third temperature below said corrosive condensation temperature, said second heat exchanger (HAA,HXB) containing a corrosion-protection material, said material limit temperature being the gas temperature at and above which said corrosion-protection material is subject to thermal damage.

The invention will be described further, by way of example, with reference to the accompanying drawings, in which:

Fig. 1 is a schematic diagram of one form of water heating system according to a first aspect of the present invention wherein cooling of the initial flue gas is achieved by damper valve means,

Figs 2 and 3 are each diagrams illustrating a use of the water-condensing heat exchanger together with a prior art air preheater; comprising a second important and preferred aspect of the present invention; and

Fig. 4 illustrates an exemplary heat recovery system according to the invention wherein damper valve means control the initial flue gas temperature entering the heat exchanger which heat exchanger heats both air and water from boiler flue gas;

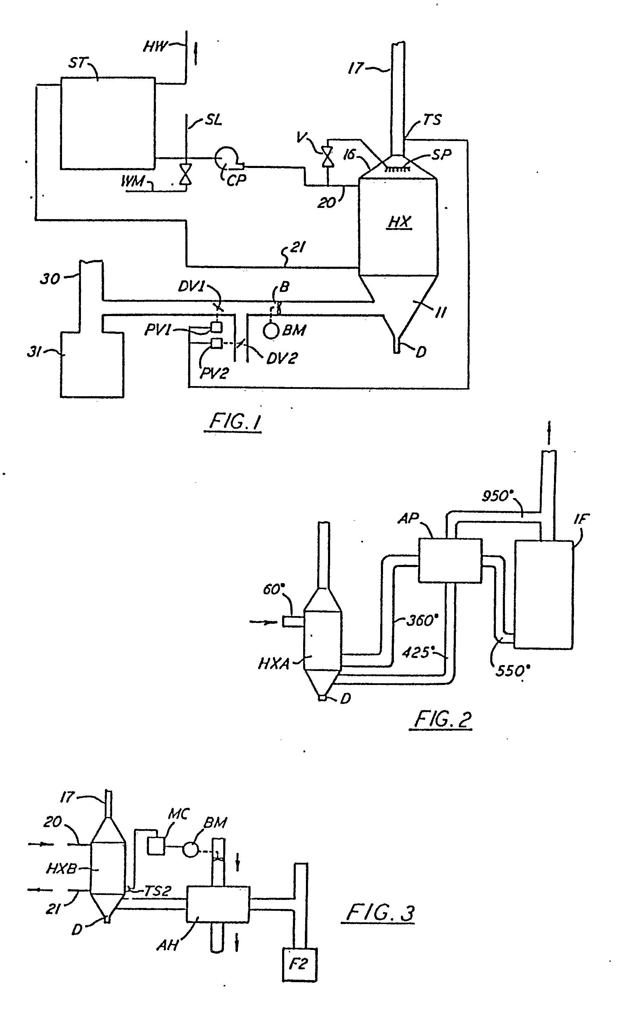

In the embodiment depicted in Fig. 1 the tubes and walls of heat exchanger unit HX are provided with Teflon coverings. Flue gas is drawn from the conventional stack 30 of boiler 31 past one or more damper valves by an induced draft blower B driven by blower motor BM, to supply the flue gas to the bottom plenum of the heat exchange unit HX, and cooled flue gas exits via fiberglass hood 16 and fiberglass stack 17 to atmosphere. The use of a fiberglass stack to resist corrosion is not per se new. Cool water from the bottom of hot water storage tank ST, from a cold water supply line SL and/or from a water main WM, is pumped through the heat exchange unit HX by circulator pump CP, and heated water from the heat exchanger is pumped into storage tank ST near its top. Hot water is drawn from the top of the storage tank via line HW for any of a variety of uses. Make-up water for boiler 31 can be supplied from tank ST, of course, or directly from unit HX.

If insufficient hot water is drawn via line HW, the contents of storage tank ST can rise in temperature enough that insufficient flue gas cooling begins to occur in the heat exchange unit, tending to endanger the Teflon corrosion-protection coverings and liners in that unit. A conventional thermal sensor TS senses outgoing flue gas temperature and operates a conventional positioner PV1, which closes damper valve DV1 to decrease or terminate passage of hot flue gas to the heat exchanger. In Fig.1 a second positioner PV2 also responsive to thermal sensor TS is shown connected to operate damper valve DV2, which can open when stack 17 temperature climbs too high, to mix cool ambient air with the flue gas thereby to prevent temperature within the heat exchanger from exceeding a value e.g. 287.78°C (500°F) deemed dangerous for the corrosion-protective coatings. In many applications only one or the other of the two described heat limit protecting means will be deemed sufficient. As will become clear below, preventing a temperature rise which would damage the corrosion-protection coatings can instead be done by using a conventional non-condensing heat exchanger to cool the exhaust gas to a safe operating temperature before the exhaust gas is passed through the water-condensing heat exchanger.

In Fig. 1 a spray manifold SP carrying a plurality of nozzles is operative to spray water down through heat exchanger HX when valve V is opened, to wash away any deposits which might have built up on heat exchanger tubes. Because operation in the water condensing mode ordinarily functions to keep the tubes clean, operation of such a spray can be quite infrequent, and in some applications of the invention provision of such a spray means may be deemed wholly unnecessary. In certain applications, such as where particulate removal is deemed particularly important, valve V can be opened to permit a continuous spray, to augment the "rain" caused by water vapor condensation.

Practice of the invention may be carried out in order to heat air rather than water, utilising heat exchanger apparatus which is extremely similar to that previously described for water heating. While use of copper tubes is preferred for water heating, aluminum tubes are preferred for air heating. In either case corrosion-protection coatings such as Teflon are used.

In various applications, the hot exhaust gas supplied by a furnace or other device may have an initial temperature substantially exceeding that (e.g. 287.87°C (550°F) to which the Teflon protective coatings can safely be exposed, but that by no means rules out use of the invention in such applications. In Fig. 2 exhaust gas emanating from an industrial furnace IF and assumed to have a temperature of 510°C (950°F) is passed to a conventional prior art air preheater AP which need not have corrosion-protective coatings. The air preheater AP also receives air from a heat exchanger HXA operated according to the invention in the water condensing mode. Heat exchanger HXA heats ambient air up to a temperature e.g.182.22°C (360°F) substantially above that which sulfuric acid will condense, and hence conventional preheater AP does not experience corrosion or clogging. Preheater AP further raises the temperature of the 182.22°C (360°F) air up to a higher temperature, e.g. 287.78°C (550°F), and that air is shown supplied to the burner of furnace I F. In heating the combustion air from 182.22°C (360°F to 287.78°C (550°F), the flue gas passing through unit AP cools from 950°F to 425°F, the latter being a temperature which the corrosion-protective coatings in heat exchanger HXA can readily withstand. With ambient air entering unit HXA at 15.56°C (60°F) very substantial condensation of water vapor from the flue gas occurs in unit HXA, and the same advantages of its water condensing mode of operation as previously discussed are obtained. In Fig. 2' it is not necessary that the heated air (shown at 287.78°C (550°F) be supplied to the same device (shown as furnace IF) which produces the initial hot exhaust gas (shown at 510.00°C (950°F); i.e. the heated air could be used for a completely different industrial process, but the arrangement shown is believed to be an advantageous and natural use of the invention. While the description of Fig. 2 refers to sulfuric trioxide as a specific condensable corrosive constituent in the exhaust gas, it will be apparent that the principles of Fig. 2 well may find application with exhaust gases which contain other potentially corrosive constituents which condense at temperatures in between the material limit operating temperature of the corrosion-protective coatings and the water vapor condensation temperature. A conventional non-condensing heat exchanger can be used to lower an exhaust gas temperature below the material limit operating temperature of the condensing heat exchanger in numerous applications where, unlike Fig. 2, the fluid heated by the condensing heat exchanger does not pass through the conventional heat exchanger, and that fluid heated by the condensing heat exchanger can be water, of course, rather than air. In Fig. 3 exhaust gas from the stack of furnace F2 passes through a conventional air preheater AH, and thence through a water-condensing heat exchanger HXB operated according to the invention, to heat water circulated through unit HXB via lines 20, 21. A thermal sensor TS2 senses the gas temperature entering unit HXB and controls the flow of the fluid being heated by a conventional heat exchanger AH, increasing that flow to decrease that flow to decrease the temperature of the gas entering unit HXB should it begin to rise above a desired value. The thermal sensor is depicted as controlling the speed of a blower motor BM via a motor controller MC, but it will be apparent that the thermal load imposed on unit AH may be varied in other ways in various applications, such as by positioning of a damper valve which controls flow of the cooler fluid through unit AH. While Figs. 2 and 3 illustrate uses of water-condensing heat exchangers with conventional or prior art non-condensing heat exchangers, it is to be understood that a water-condensing heat exchanger and a non-condensing heat exchanger can be combined in the sense of being mounted adjacent each other or on a common support so as to shorten or eliminate ducting between the two heat exchangers. (The usual flue gas exit temperature from many conventional economizers and air preheaters is maintained at about 176.66°C(350°F) to avoid condensation of $SO_3$.) It is common at many steam generating plants to route boiler furnace gas successively through an economizer, an air preheater and a bag house to a stack. In order to avoid serious corrosion in the air preheater it has been necessary to preheat ambient air before it enters the conventional air preheater. Such preheating conventionally has been done by means of steam coils in the inlet air duct. In accordance with the invention, such steam coils may be eliminated. A water-condensing heat exchanger installed to receive flue gas which has passed through the conventional air preheater may be used to heat ambient air and supply it to the conventional air preheater at a sufficiently high temperature that no condensation or corrosion will occur in the conventional air preheater. Many industrial boilers use economizers to heat boiler feed water, and in many cases such boilers require 50-75% cold makeup water. The water-condensing heat exchanger may be installed to receive the flue gas exiting from the economizer at say 176.67°C (350°F), which normally has been expelled through a stack, to heat the boiler makeup water before the water goes to the deaerator associated with the boiler.

It should be understood that while temperatures of the order of 500-550°F have been mentioned as suitable upper limits with currently available Teflon materials, that such limits may rise as the thermal properties of Teflon are improved in the future, or as other materials having higher material limit operating temperatures become available.

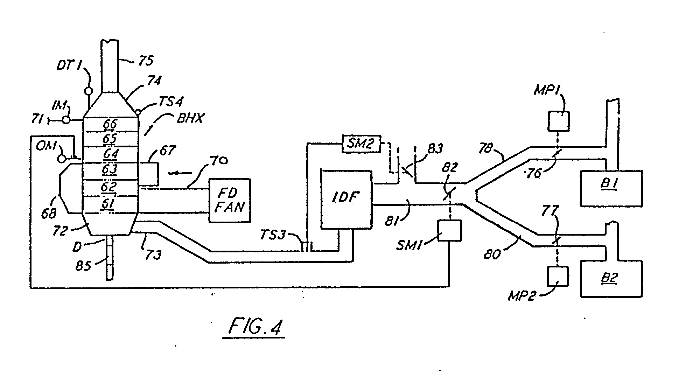

In the system shown in Fig. 4 a water-condensing heat-exchanger BHX arranged to heat both combustion air and boiler make-up water comprises six vertically-stacked modules 61-66. Ambient or room air enters module 63 and the upper half of module 62 through an inlet duct 67, makes one pass across the heat exchanger, and is directed by return plenum or hood 68 back through the tubes in module 61 and the top half of module 62, into ducting 70 which connects to the inlet of a forced draft fan FDF.

The upper three modules 64-66 of heat exchanger BHX preheat boiler makeup water. The water flows from a cold water main source 71 to an inlet manifold IM which distributes the water laterally across the top row of tubes in module 66 in seven water flow paths which progress horizontally and vertically through modules 64-66 to outlet manifold OM. Flue gas enters lower plenum 72 of heat exchanger BHX through duct 73, and passes upwardly through modules 61 to 66 in succession, into fiberglass upper plenum 74 and thence out fiberglass stack 75. The heat recovery system of Fig. 4 is intended to accommodate flue gas, combustion air and makeup water flow rates prevailing in a boiler system having two boilers B1, B2, which system produces a maximum of 22,680 Ks (50,000 pounds) per hour of steam firing No. 6 fuel oil at 15% excess air and with 67% makeup water, and an average of 13,608 Kg(30,000 pounds) per hour. Flue gas is pulled from the stacks of the two boilers by a single induced-draft fan IDF, with the amount of flue gas being drawn from each boiler being controlled by a respective damper, 76 or 77, which is controlled by a respective modulating positioner, MP1 or MP2, and the modulating positioners are each controlled by the load on a respective boiler using conventional pneumatic control signals from a conventional boiler control system. The modulating positioners are set so that under full load conditions dampers 76 and 77 are fully open and all of the flue gas produced by each boiler is directed to heat exchanger BHX. If fan IDF were to pull more flue gas than both boilers are producing, either the boiler excess air would increase or outside air would be drawn down the boiler stacks, in either case decreasing efficiency. To avoid those problems, dampers 76 and 77 decrease the amount of flue gas drawn from each boiler when its load is decreased. The modulating positioners MP1 and MP2 close their respective dampers when their associated boilers are shut down, and they are interlocked with induced-draft fan IDF to close their dampers if fan IDF is not running, and then all flue gas will exit through the boiler stacks.

The ducts 78, 80 containing dampers 76, 77 merge to a common duct 81. Damper 82 in duct 81 regulates the total amount of flue gas going to heat exchanger BHX depending upon the combustion air and makeup water demand rates. Damper 82 is modulated to control the temperature water demand rates. Damper 82 is modulated to control the temperature of the pre-heated makeup water exiting from exchanger BHX at a desired set point (82.22°C)180°F), by sensing the water temperature at its exit from unit BHX to operate a proportional servomotor SM1. Damper 82 is normally fully open, allowing all of the flue gas being produced by the boilers to pass through heat exchanger BHX, but during rapid transient conditions, or during periods of reduced makeup water requirements, more heat may be available from the flue gas than can be utilised to preheat the combustion air and makeup water, in which case the temperature of the water exiting from heat exchanger BHX will start to rise, but servomotor SM1 then will begin to close damper 82 to maintain the exit temperature of the water from heat exchanger BHX at the desired set point. Since the flue gas passed first through the lower air-heating section and then through the water-heating section, where the input water temperature 77.8°C (e.g.46°F) is lower than the input air temperature (e.g. 29.44°C) 85°F), maximum heat recovery is obtained. A further modulating damper 83 ahead of the induced draft fan operates to limit the temperature of the flue gas by admitting sufficient room air to mix with the flue gas that the inlet temperature of the flue gas to heat exchanger BHX does not exceed the safe operating temperature (e.g. 260°C (500°F) for the Teflon corrosion-prevention materials which line heat exchanger BHX. Temperature sensor TS3 senses the flue gas temperature at the exit of fan IDF to control the position of damper 83 via servomotor SM2. If the temperature of the flue gas is 260°C (500°F) or less, damper 83 will be fully closed.

The flue gas passes from fan IDF through a short section of ducting 73 into bottom plenum 72, and thence upwardly through heat exchanger BHX, first heating combustion air and then heating boiler makeup water, and copious condensation occurs, providing numerous advantageous effects heretofore described. Drain line D at the bottom of unit BHX includes a transparent section of tubing 85 through which the color of the condensate may be observed. When No. 6 oil is used as boiler fuel, the condensate is black due to the large amount of particulate matter and $SO_3$ removed from the flue gas, while use of natural gas as boiler fuel provides a virtually clear condensate due to the very small amounts of particulate matter in the flue gas.

A dial thermometer DT1 located in stack 75 indicates flue gas exit temperature, which typically varies between 32-22°C (90°F) and 93.33°C (200°F), depending upon boiler load. Temperature sensor TS4 also located at stack 75 serves to shut down the heat recovery system by closing damper 82 if the flue gas exit temperature should exceed 93.33 (200°F).

Simple BTU computers receive water and air temperature and flow rate signals and compute the amounts of heat recovered. At an average steam load of 30,000 pounds per hour, the combined amount of heat recovered is 3,468,000 Btu per hour. Prior to use of the condensing heat exchanger the average steam load of 30,000 pounds per hour required an average fuel consumption of 148.4 gallons per hour of No. 6 fuel (148,000 Btu per gallon) with a boiler efficiency of 80%. Utilising the water-condensing heat exchanger 29.3 gallons per hour of fuel are saved, a savings of 20%.

The lower housing comprises a simple steel sheet housing completely lined with 60 mil TFE Teflon, with its flanges also covered with Teflon in generally the same manner as in the tube modules. The lower housing may take a variety of different shapes in various applications. An upper section (e.g. 30.48 cm 1 foot) of drain D which connects to the bottom of the lower housing is also preferably formed TFE Teflon tubing.

It is believed that flue gas flow velocities up to 18.288 metres (60 feet) per second will be quite workable, and that flue gas pressure drops across a water-condensing heat exchanger of 7.62 cm (3 inches) of water should be workable.

It will thus be seen that the objects set forth above, among those made apparent from the preceding description, are efficiently attained. Since certain changes may be made in carrying out the above method and in the constructions set forth without departing from the scope of the invention, it is intended that all matter contained in the above description or shown in the accompanying drawings shall be interpreted as illustrative and not in a limiting sense.

The embodiments of the invention in which an exclusive property or privilege is claimed are defined as follows:

## Claims

1. A method of recovering heat energy from an exhaust gas containing a corrosive constituent which is condensable at and below a corrosive condensation temperature by passing said gas successively through first and second heat exchangers each connected to transfer heat to a fluid, said second heat exchanger containing a corrosion-protection material having a material limit operating temperature exceeding said corrosive condensation temperature, the flow rates and temperatures of said exhaust gas and the fluid being heated by each heat exchanger being arranged so that passage of said exhaust gas through said first heat exchanger cools said exhaust gas from a first temperature to a second temperature which is below said material limit operating temperature but above said corrosive condensation temperature, and passage of said exhaust gas through said second heat exchanger cools at least a portion of said exhaust gas from a temperature above said corrosive condensation temperature to a temperature below said corrosive condensation temperature whereby said corrosive constituent does not condense in said first heat exchanger, said corrosive constituent does condense in said second heat exchanger, and the cooling of said gas in said first heat exchanger prevents thermal damage to said second heat exchanger.

2. A method as claimed in claim 1 characterised in that said first temperature exceeds said material limit operating temperature.

3. A method as claimed in claim 1 or 2, characterised in that said exhaust gas comprises flue gas containing water vapor and said corrosive constituent comprises sulfur trioxide, whereby passage of said exhaust gas through said second heat exchanger produces sulfuric acid.

4. A method as claimed in claims 1 to 3, characterised in that the step of passing said exhaust gas through said second heat exchanger comprises passing said exhaust gas in heat exchange relationship generally perpendicularly to and between generally horizontally extending tubes of a tube nest.

5. A method as claimed in any of claims 1 to 4, characterised in that said corrosion-protection material comprises a fluoroplastic.

6. Apparatus for recovering heat energy from a hot exhaust gas containing a corrosive constituent which is condensable at and below a corrosive condensation temperature, comprising, in combination: a first heat exchanger (AP,AH) connected to receive said hot exhaust gas at a first temperature and operative to cool said exhaust gas by transferring heat to a fluid and to discharge said exhaust gas at a second temperature which is above said corrosive condensation temperature and which is below a material limit temperature; and a second heat exchanger (HXA,HXB) connected to receive exhaust gas which has been discharged from said first heat exchanger (AP,AH) and operative to cool at least a potion of said exhaust gas by transferring heat to a fluid to a third temperature below said corrosive condensation temperature. said second heat exchanger (HAA, HXB) containing a corrosion-protection material, said material limit temperature being the gas temperature at and above which said corrosion-protection material is subject to thermal damage.

7. Apparatus as claimed in claim 6, characterised in that said corrosion-protection material comprises a fluoroplastic.

8. Apparatus as claimed in claim 6 or 7, characterised in that said first temperature exceeds said material limit temperature.

9. Apparatus as claimed in any of claims 6 to 8. characterised in that said second heat exchanger comprises a plurality of generally horizontally extending metal tubes having coverings formed of said corrosion-protection material.

10. Apparatus for recovering heat energy from a hot exhaust gas containing a corrosive constituent which is condensable at and below a corrosive condensation temperature, comprising, in combination: a heat exchanger containing a corrosion-protection material having a material limit temperature above which said corrosion-protection material is subject to thermal damage and said heat exchanger being connected to ducting means connectable to receive said hot exhaust gas at a first temperature and operative to cool at least a portion of said exhaust gas by transferring heat to a fluid to a second temperature below said corrosive condensation temperature; said ducting means including temperature controlled valve means (TS,PV1,DV1; JS, PV2 DV2: SM1,82 TS3, SM1, 83) to reduce the flow of hot gas and/or to permit the inflow of cool air to prevent the temperature within the heat exchanger exceeding a predetermined valve above which the corrosion-protection material might be damaged.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A-2 625 099 (G. SCHUSTER) * Claims 1,2,4,5,6; figures * | 1,4,6 | F 28 D 21/00 B 01 D 53/00 F 23 J 15/00 |
| A | GB-A-2 012 940 (KRUPP-KOPPERS GmbH) * Claims 1,9,12,13 * | 1,4,6, 10 | |
| A | FR-A-2 483 065 (SOCIETE ANONYME DE CONSTRUCTION MECANIQUE) * Claims 6,8,9; figure 3 * | 10 | |
| A | US-A-4 031 862 (F.J. SMITH) | | |

TECHNICAL FIELDS SEARCHED (Int. Cl.4)

B 01 D 5/00
B 01 D 53/00
F 23 J 15/00

The present search report has been drawn up for all claims

| Place of search | Date of completion of the search | Examiner |
|---|---|---|
| THE HAGUE | 21-03-1989 | POLESAK, H.F. |